# DEMANDE DE BREVET EUROPEEN

(11) **EP 2 656 717 A1**
(43) Date de publication de la demande: **30.10.2013**
(21) Numéro de dépôt: 13164859.4
(22) Date de dépôt: 23.04.2013
(51) Int. Cl.: A01C 19/00, F16C 1/06

(54) **Dispositif de transmission souple comprenant des moyens de rigidification le long d'une première direction et non le long d'une deuxième direction**

(30) Priorité: 24.04.2012 FR 1253748
(71) Demandeur: Ribouleau Monosem, 79240 Largeasse (FR)
(72) Inventeur: Bergere, Caroline, 79300 Bressuire (FR)
(74) Mandataire: Provost, Antoine

(57) **Abrégé**

L'invention concerne un dispositif de transmission souple (3) comprenant une gaine de guidage (30) logeant un câble de transmission.

Selon l'invention, un tel dispositif comprend des moyens de rigidification (35) pour limiter la déformation de ladite gaine (30) le long d'une première direction (D1) perpendiculaire à l'axe longitudinal (Δ) de ladite gaine (30) sans prévenir la déformation de celle-ci le long d'une deuxième direction (D2) essentiellement orthogonal à ladite première direction (D1) et audit axe longitudinal (Δ), les moyens de rigidification (35) étant solidaires de la gaine (30).

## Description

### 1. Domaine de l'invention

Le domaine de l'invention est celui de la conception et de la réalisation d'équipements agricoles destinés à assurer la distribution de produit(s) sur une surface cultivable, comme par exemples des graines ou des fertilisants.

Plus précisément, l'invention concerne un dispositif de transmission souple pouvant être utilisé pour animer les moyens de distribution mis en oeuvre dans de tels équipements.

### 2. Art antérieur

Les agriculteurs utilisent classiquement des équipements agricoles pour ensemencer leurs surfaces cultivables. Au rang de ces équipements figurent les semoirs qui permettent de distribuer des graines, ainsi que les fertiliseurs qui permettent de distribuer des produits fertilisants.

Les semoirs et les fertiliseurs comprennent des moyens de distribution respectivement de graines et de fertilisant. Ces moyens de distribution comprennent généralement un élément fixe à l'intérieur duquel un élément de distribution est monté mobile en rotation. La mise en rotation de l'élément de distribution à l'intérieur de l'élément fixe permet d'assurer la distribution des graines ou du fertilisant depuis leur zone de stockage, comme un réservoir ou une trémie, jusqu'à la surface à cultiver.

L'élément de distribution est classiquement mis en mouvement au moyen d'un arbre moteur relié à l'élément de distribution par une transmission. L'arbre moteur est lui-même entraîné en rotation du fait du déplacement du semoir ou du fertiliseur sur le sol. Dans des cas particuliers, l'élément de distribution pourra être mis en mouvement au moyen d'un moteur hydraulique ou d'un moteur électrique.

La transmission entre l'arbre moteur et l'élément de distribution est la plupart du temps réalisée au moyen d'une chaîne. Dans ce cas, l'arbre moteur porte un premier pignon et l'élément de distribution porte un deuxième pignon, la chaîne engrenant ces deux pignons.

Une telle transmission par chaîne présente l'avantage d'assurer de manière simple une activation précise et efficace des moyens de distribution, et ainsi de réaliser une distribution de graines et/ou de fertilisants satisfaisante.

Toutefois, au cours de la réalisation d'une opération d'ensemencement et/ou de fertilisation, les chaînes équipant les semoirs et/ou les fertiliseurs peuvent être soumises aux intempéries et à des projections de terre et de débris de végétaux en dépit de la mise en oeuvre de carters pour en assurer la protection. Ces phénomènes ont tendance à accélérer la détérioration de ces chaînes, et/ou à provoquer des déraillements de chaîne.

Ces chaînes nécessitent en outre d'être régulièrement lubrifiées pour les maintenir en état de fonctionnement.

Par conséquent, l'utilisation de chaîne pour assurer la transmission entre l'arbre moteur et les moyens de distribution implique la mise en oeuvre régulière de campagnes de maintenance.

Afin de limiter ces campagnes de maintenance, d'autres types de transmissions sont mises en oeuvre. En particulier, la liaison entre l'arbre moteur et les moyens de distribution peut être réalisée au moyen d'une transmission souple.

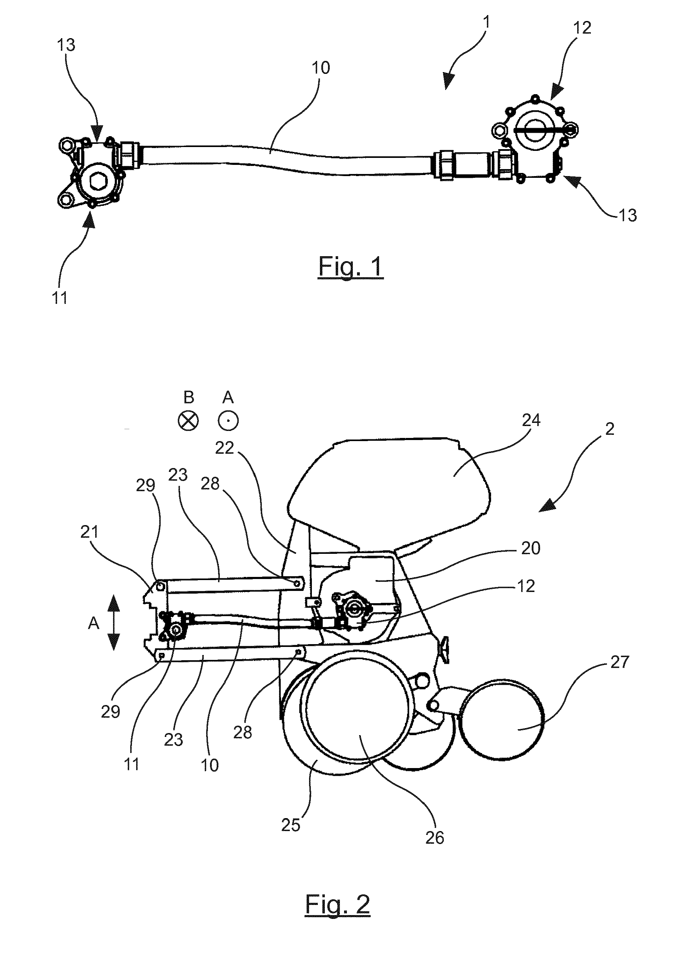

Ainsi que cela est représenté à la figure 1, une transmission souple 1 comprend classiquement une gaine de guidage 10 à l'intérieur de laquelle est monté un câble de transmission (non représenté). Chaque extrémité du câble de transmission est respectivement reliée à une entrée 11 et une sortie 12 de transmission au moyen d'un renvoi d'angle 13. L'entrée 11 de la transmission est reliée à un arbre moteur et la sortie 12 est reliée à l'élément de distribution. Ainsi, le mouvement de rotation de l'arbre moteur qui entraîne l'entrée 11, est transmis via le câble de transmission et les renvois d'angle 13 à la sortie 12 qui entraîne en rotation l'élément de distribution.

La figure 2 illustre un élément semeur comprenant une transmission souple de ce type. Ainsi que cela est représenté sur cette figure 2, un tel élément semeur 2 comprend une première partie d'élément semeur 21 et une deuxième partie d'élément semeur 22. La première partie d'élément semeur 21 est destinée à être solidarisée de manière fixe à châssis pour former un semoir. Un semoir comprend généralement plusieurs éléments semeurs solidarisés côte-à-côte au châssis. Le châssis est lui même fixé à un engin agricole, comme par exemple un tracteur. Les première 21 et deuxième 22 parties d'élément semeur sont solidarisées entre elles au moyen de deux paires de tringles 23 définissant avec les première 21 et deuxième 22 parties d'élément semeur deux parallélogrammes articulés déformables. L'élément semeur repose sur le sol au moyen de deux roues de jauges 26 entre lesquelles une paire de disques creuseurs 25 est placée. Les disques creuseurs 25 permettent de creuser un sillon dans la terre lorsque l'élément semeur est déplacé sur le sol. La position des roues de jauges 26 permet de régler la profondeur du sillon. La deuxième partie d'élément semeur 22 supporte un réservoir de stockage de graines 24 dont la sortie est reliée à un distributeur de graine 20. L'élément de distribution du distributeur 20 est relié à la sortie 12 de la liaison souple. L'entrée 11 est destinée à être solidarisée à des moyens moteur solidaires du châssis. Une rotation de ces moyens moteur permet d'entraîner en rotation l'élément de distribution est ainsi de distribuer les graines contenues dans le réservoir 24 dans le sillon préalablement creusé au moyen des disques creuseurs 25 dans la surface cultivable sur laquelle l'élément semeur 2 est déplacé. Un bloc arrière 27, comprenant deux roues placées l'une à côté de l'autre, permet de refermer le sillon après que les graines y ont été déposées.

Le câble de transmission d'une telle transmission souple se trouve être protégé, à l'intérieur de la gaine de guidage 10, des projections de terre, de débris de végétaux et d'eau. Une telle transmission souple présente ainsi notamment l'avantage d'avoir une longue durée de vie, à tout le moins comparativement aux transmissions classiques par chaîne-pignons. Ceci conduit également à limiter les opérations de lubrification nécessaires au maintien de la transmission en bon état de fonctionnement. Les campagnes de maintenance peuvent ainsi être espacées. En outre, une transmission souple n'engendre pas de risque de déraillement.

La mise en oeuvre de telles transmissions souples présente néanmoins quelques inconvénients.

### 3. Inconvénients de l'art antérieur

Lorsque le semoir est déplacé sur le sol, le ou les éléments semeur 2 suivent la surface de celui-ci. La deuxième partie d'élément semeur 22 pivote alors par rapport aux articulations 28 alors que les tringles 23 pivotent par rapport aux articulations 29, la première partie d'élément semeur 21 étant solidarisée à un châssis fixé au tracteur.

Au cours de ces déplacements, la distance entre l'entrée 11 et la sortie 12 de la transmission 1 varie. La gaine de guidage 10 est donc suffisamment longue pour permettre à l'élément semeur de suivre le profil du sol. Celle-ci a alors tendance à se déformer dans toutes les directions.

La déformation de la gaine 10 dans un plan essentiellement verticale ne pose pas de problème dans la mesure où la distance qui sépare les tringles 23 est suffisamment grande pour éviter que la gaine vienne frotter contre celles-ci.

Il en est autrement concernant ses déplacements dans un plan essentiellement horizontal. En effet, des équipements annexes, non représentés, sont généralement montés de part et d'autre des tringles 23 comme par exemples des boîtes de vitesses, des ressorts, des blocs roues portant le semoir ou tout autres équipements. La gaine peut ainsi venir frotter contre ces équipements. Ceci tend à accélérer son usure ce qui à un impact sur le coût d'entretien de la transmission et par extension du semoir.

### 4. Objectifs de l'invention

L'invention a notamment pour objectif de pallier ces inconvénients de l'art antérieur.

Plus précisément, un objectif de l'invention est de fournir, dans au moins un mode de réalisation, un dispositif de transmission souple qui soit particulièrement robuste et ait une durée de vie relativement longue, à tout le moins comparativement aux transmissions de l'art antérieur.

Un autre objectif de l'invention est de mettre en oeuvre un tel dispositif de transmission souple qui permette, dans au moins un mode de réalisation, de maîtriser, à tout le moins en partie, la déformation de la gaine de guidage lorsque la distance entre ses deux extrémités varie.

L'invention a encore pour objectif de procurer un tel dispositif qui soit, dans au moins un mode de réalisation, simple à mettre en oeuvre.

Un autre objectif de l'invention est de fournir un tel dispositif qui soit, dans au moins un mode de réalisation, simple à réaliser, et/ou fiable, et/ou bon marché.

### 5. Exposé de l'invention

Ces objectifs, ainsi que d'autres qui apparaîtront par la suite, sont atteints à l'aide d'un dispositif de transmission souple comprenant une gaine de guidage logeant un câble de transmission.

Selon l'invention, un tel dispositif comprend des moyens de rigidification pour limiter la déformation de ladite gaine le long d'une première direction perpendiculaire à l'axe longitudinal de ladite gaine sans prévenir la déformation de celle-ci le long d'une deuxième direction essentiellement orthogonal à ladite première direction et audit axe longitudinal, les moyens de rigidification étant solidaires de la gaine.

Ainsi, l'invention repose sur une approche tout à fait originale qui consiste à mettre en oeuvre des moyens permettant de rigidifier la gaine d'une transmission souple le long d'une première direction perpendiculaire à son axe longitudinal et non, ou à tout le moins dans une moindre mesure, le long d'une deuxième direction perpendiculaire à la première et à cet axe. Ainsi, lorsque la gaine d'une transmission souple se déforme du fait d'une variation de la distance entre ses extrémités, ses mouvements sont maîtrisés, celle-ci ayant davantage tendance à se déformer autour de la première direction, c'est-à-dire le long de la deuxième direction, que autour de la deuxième direction, c'est-à-dire le long de la première direction.

Lorsqu'un dispositif de transmission selon l'invention est solidarisé à un élément semeur tel que celui qui est représenté à la figure 2, et considérant que la première direction s'étend essentiellement horizontalement et la deuxième direction s'étend essentiellement verticalement, la déformation de la gaine sera permise selon la flèche A et empêchée selon les flèches B. On évitera ainsi que cette gaine vienne frotter contre des éléments montés de part et d'autre de celle-ci. La durée de vie de la transmission est ainsi augmentée.

Selon un mode de réalisation avantageux, lesdits moyens pour limiter la déformation comprennent au moins un élément de rigidification qui s'étend le long d'au moins une partie de ladite gaine selon son axe longitudinal, le moment quadratique dudit élément de rigidification par rapport à ladite première direction étant plus faible que son moment quadratique par rapport à ladite deuxième direction.

La résistance à la flexion de l'élément de rigidification par rapport à la première direction est donc inférieure à celle par rapport à la deuxième direction. On favorise ainsi la déformation de la gaine le long de la deuxième direction D2 (flèche A), c'est-à-dire dans le plan passant par la deuxième direction D2 et l'axe longitudinal de la gaine, alors qu'on la limite davantage le long de la première direction D1 (flèche B), c'est-à-dire dans un plan passant par l'axe longitudinal de la gaine et par la première direction D1.

Préférentiellement, ledit élément de rigidification à une section essentiellement rectangulaire.

La mise en oeuvre d'un élément de rigidification ayant une telle section permet d'obtenir le résultat souhaité en terme de maitrise des directions de déformation de la gaine. D'autres sections adaptées pourront alternativement mises en oeuvre comme par exemple les sections ovoïdales.

Dans une variante, ledit élément de rigidification est réalisé en matière métallique.

Dans ce cas, ledit élément de rigidification comprendra par exemple au moins un fer plat.

Les fers plats sont simples à mettre en oeuvre tout en étant bon marché et en offrant de bons résultats.

Dans une autre variante, ledit élément de rigidification est réalisé en matière plastique et/ou composite.

Il pourra par exemple s'agir d'un matériau composite chargé de fibres de carbone.

Ledit élément de rigidification pourra être solidarisé à ladite gaine par clippage.

Dans une variante, ladite gaine est surmoulée autour dudit élément de rigidification.

L'invention concerne également des moyens de rigidification pour dispositif de transmission selon l'une quelconque des variantes exposées précédemment.

L'invention concerne encore un équipement agricole comprenant :
- un dispositif de transmission selon l'une quelconque des variantes exposées précédemment ;
- un premier élément destiné à être solidarisé à un engin agricole, et un deuxième élément portant des moyens de distribution d'un produit destinés à être entraînés en mouvement par ledit dispositif de transmission, lesdits premier et deuxième éléments étant liés entre eux au moyen de tringles formant avec lesdits éléments au moins un parallélogramme articulé en sorte que ledit deuxième élément est mobile par rapport audit premier élément dans un plan passant par ledit axe longitudinal et ladite deuxième direction,
une extrémité de ladite gaine étant reliée auxdits moyens de distribution, son autre extrémité étant solidarisée audit premier élément et destinée à être solidarisée à des moyens moteur.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une vue de côté d'un dispositif de transmission souple selon l'art antérieur ;
- la figure 2 illustre une vue de côté d'un élément semeur comprenant un dispositif de transmission illustré à la figure 1 ;
- la figure 3 illustre une vue de côté d'un dispositif de transmission souple selon l'invention ;
- la figure 4 illustre une vue de côté d'un élément semeur comprenant un dispositif de transmission illustré à la figure 3 ;
- les figures 5 à 8 illustrent des coupes transversales de dispositifs de transmission souple selon différents modes de réalisation de l'invention ;

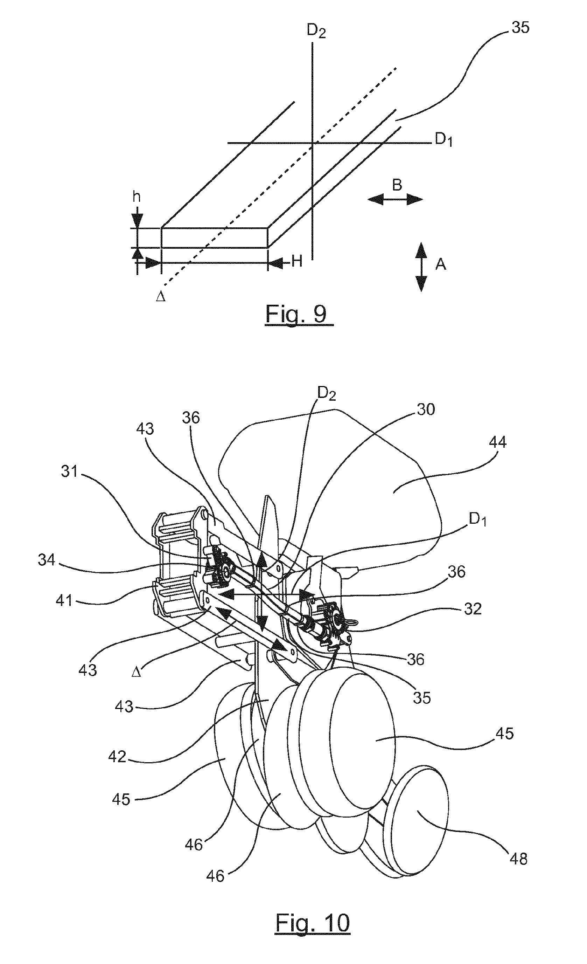

- la figure 9 illustre une vue partielle en perspective d'un élément de rigidification d'un dispositif de transmission souple selon l'invention ;
- la figure 10 illustre une vue en perspective d'un élément semeur comprenant un dispositif de transmission souple selon l'invention.

### 7. Description d'un mode de réalisation de l'invention

### 7.1. Rappel du principe général de l'invention

Le principe général de l'invention repose sur la mise en oeuvre de moyens permettant de rigidifier la gaine d'une transmission souple le long d'une première direction perpendiculaire à son axe longitudinal, et non, ou à tout le moins dans une moindre mesure, le long d'une deuxième direction perpendiculaire à la première et à cet axe.

Les mouvements d'une gaine de transmission souple sont ainsi maitrisés lorsque la distance entre ses extrémités varie.

Lorsqu'un dispositif de transmission souple selon l'invention est monté sur un équipement, comme par exemple un équipement agricole tel qu'un élément semeur, il peut ainsi être placé de telle sorte que la gaine ne vienne pas frotter contre des parties de l'élément semeur et/ou des équipements montés autour afin d'éviter que celle-ci ne s'use prématurément.

### 7.2. Exemple d'un dispositif de transmission souple selon l'invention

### 7.2.1. Architecture

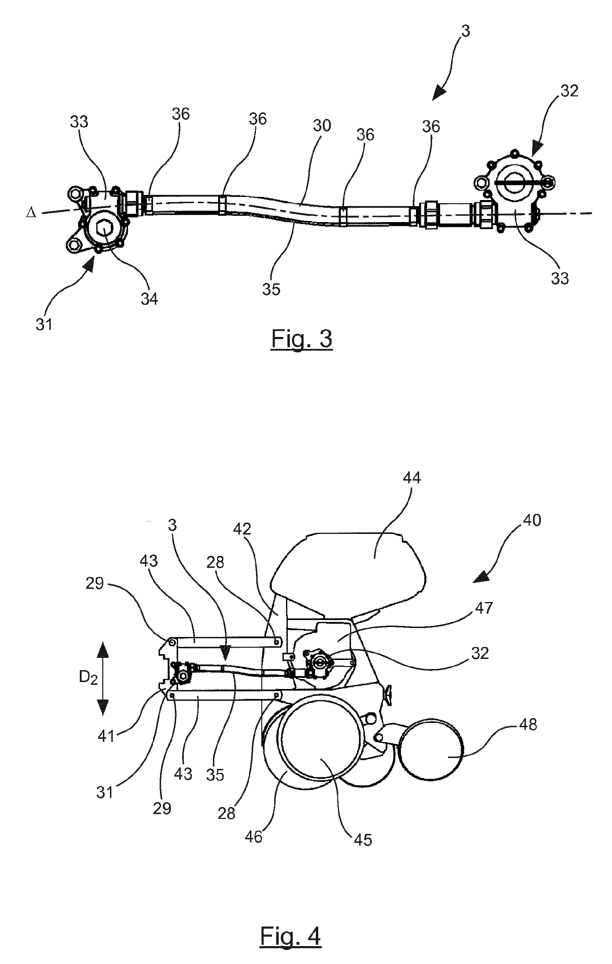

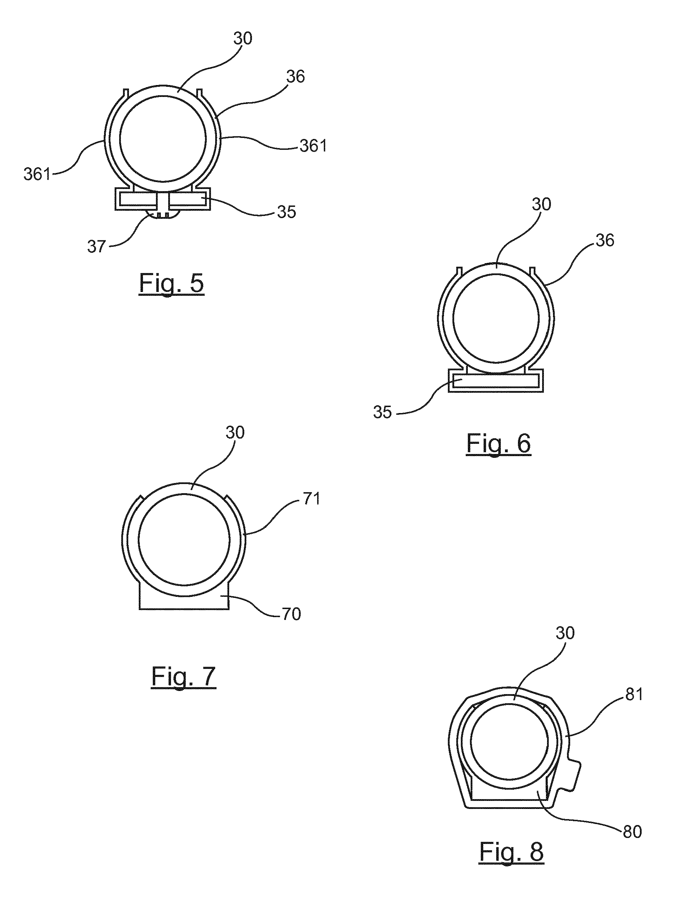

On présente, en relation avec les figures 3 et 5, un mode de réalisation d'un dispositif de transmission souple selon l'invention.

Ainsi que cela est représenté sur ces figures 3 et 5, un tel dispositif de transmission souple 3 comprend une gaine de guidage 30 à l'intérieur de laquelle est monté un câble de transmission (non représenté). Chaque extrémité du câble de transmission est respectivement reliée à une entrée 31 et une sortie 32 de transmission au moyen d'un renvoi d'angle 33.

L'entrée 31 de la transmission est destinée à être reliée à des moyens moteur comme par exemple un arbre moteur. Elle comprend de ce fait une empreinte 34 ayant une forme complémentaire de celle de l'arbre moteur. Dans des variantes, la forme de l'entrée 31 pourra être différente. Elle pourra également être reliée à un autre type de moyen moteur.

Le mouvement de rotation de l'arbre moteur qui entraîne l'entrée 31, et plus particulièrement l'empreinte 34, est ainsi transmis via le câble de transmission et les renvois d'angle 33 à la sortie 32.

La sortie 32 est destinée à être reliée à un élément devant être entrainé en rotation. Il pourra par exemple d'agir de l'élément de distribution du distributeur d'un élément semeur.

Le dispositif de transmission souple comprend des moyens de rigidification pour limiter la déformation de la gaine 30 le long d'une première direction D1 perpendiculaire l'axe longitudinal Δ de la gaine 30 sans prévenir, ou à tout le moins en limitant dans une moindre mesure la déformation de celle-ci le long d'une deuxième direction D2 essentiellement orthogonale à la première direction D1 et à l'axe longitudinal Δ.

Dans ce mode de réalisation, ces moyens de rigidification comprennent un élément en fer plat 35 ayant une section rectangulaire.

La hauteur H de l'élément de rigidification 35 le long de la première direction D1 est supérieure à sa hauteur h le long de la deuxième direction D2. Le moment quadratique de l'élément de rigidification 35 par rapport à la direction D2, qui est égale à (h*H³)/12, est donc supérieur à son moment quadratique par rapport à la direction D1, qui est égale à (H*h³)/12. Ainsi, l'élément de rigidification est plus difficile à déformer le long de la direction D1 que le long de la direction D2. En d'autres termes, l'élément de rigidification est plus facile à déformer autour de la direction D1 qu'autour de la direction D2.

Des colliers de clippage 36 métalliques sont solidarisés à l'élément de rigidification 35 par exemple au moyen de vis 37, comme cela est représenté à la figure 5, ou par emmanchement à force, comme cela est illustré à la figure 6.

Dans une variante, telle que celle qui est illustrée à la figure 7, les colliers 71 et l'élément de rigidification 70 pourront être formés d'un seul tenant.

L'élément de rigidification 35 et/ou les colliers 36 pourront être réalisés en plastique.

Chaque collier 36 comprend deux ailes 361 déformables élastiquement qui définissent un logement apte à loger la gaine 30. Lors de la solidarisation de l'élément de rigidification 35 à une gaine 30, celui-ci est appliqué contre la gaine 30. Les ailes 361 s'écartent alors progressivement en sorte que la gaine 30 puisse entrer à l'intérieur du logement. Elles se referment ensuite progressivement pour maintenir la gaine 30 prisonnière à l'intérieur du logement.

Dans la variante illustrée à la figure 8, l'élément de rigidification 80 est solidarisé à la gaine 30 au moyen de colliers 81 de type serflex®.

Dans d'autres variantes, la gaine 30 pourra être surmoulée autour de l'élément de rigidification 35. Dans ce cas, celui-ci pourra alternativement être en métal ou en plastique.

Dans ce mode de réalisation, l'élément de rigidification s'étend tout le long de la gaine. Dans des variantes, il pourra s'étendre le long d'une portion seulement de la gaine. Les moyens de rigidification pourront également comprendre une pluralité d'éléments de rigidification placés le long de la gaine.

### 7.2.2. Déformation maîtrisée

La solidarisation d'un élément de rigidification selon l'invention à une gaine d'une transmission souple permet de maitriser la déformation de la gaine lorsque la distance qui sépare ses extrémités varie.

En effet, le moment quadratique de l'élément de rigidification par rapport à la direction D2 est plus important que celui par rapport à la direction D1. En d'autres termes, l'élément de rigidification résiste davantage à des efforts de flexion autour de la direction D2 qu'autour de la direction D1. Par conséquent, lorsque la distance entre les extrémités de la gaine varie, et en particulier lorsqu'elle est diminuée, la gaine se déformera davantage selon la direction D2 que selon la direction D1. En d'autres termes, la gaine se déformera davantage le long de la deuxième direction D2 et autour de la première direction D1, c'est-à-dire dans un plan passant par l'axe longitudinal Δ et la deuxième direction D2, que le long de la première direction D1 et autour de la deuxième direction D2, c'est-à-dire dans un plan passant par l'axe longitudinal Δ et la première direction D1. La déformation de la gaine est en ce sens maitrisée.

### 7.2.3. Mise en oeuvre sur un élément semeur

Un dispositif de transmission selon l'invention peut par exemple être mis en oeuvre au sein d'un élément semeur tel que cela est représenté à la figure 4.

L'élément semeur 40 comprend une première partie d'élément semeur 41 et une deuxième partie d'élément semeur 42. La première partie d'élément semeur 41 est destinée à être solidarisée de manière fixe à un châssis auquel peuvent être solidarisés plusieurs éléments semeur pour former un semoir. Ce châssis est lui-même destiné à être solidarisé à un engin agricole (non représenté), comme par exemple un tracteur. Les première 41 et deuxième 42 parties d'élément semeur sont solidarisées entre elles au moyen de deux paires de tringles 43 définissant avec les première 41 et deuxième 42 parties d'élément semeur deux parallélogrammes articulés déformables. L'élément semeur repose sur le sol au moyen de deux roues de jauges 45 entre lesquelles une paire de disques creuseurs 46 est placée. Les disques creuseurs 46 permettent de creuser un sillon dans la terre lorsque l'élément semeur 40 est déplacé sur le sol. La profondeur de ce sillon est réglée par la position des roues de jauges 45. La deuxième partie d'élément semeur 42 supporte un réservoir de stockage de graines 44 dont la sortie est reliée à un distributeur de graines 47. Le distributeur 47 comprend un élément de distribution mobile en rotation, lequel est relié à la sortie 32 du dispositif de transmission souple 3. L'entrée 31 est destinée à être solidarisée à un arbre moteur prévu à cet effet. Pour cela, l'arbre moteur est introduit à l'intérieur de l'empreinte de forme complémentaire 34. Une rotation de cet arbre moteur permet d'entraîner en rotation l'élément de distribution via le dispositif de transmission souple, et ainsi de distribuer les graines contenues dans le réservoir dans le sillon préalablement creusé au moyen des disques creuseurs 46 dans la surface cultivable sur laquelle l'élément semeur est déplacé. Un bloc arrière 48, comprenant deux roues placées l'une à côté de l'autre, permet de refermer le sillon après que les graines y ont été déposées.

Lorsque l'élément semeur est déplacé sur le sol, la deuxième partie d'élément semeur 42 bouge dans un plan essentiellement vertical par rapport à la première partie d'élément de semeur 41 en suivant les irrégularités du sol du fait de la mise en oeuvre des tringles articulées 43. Pour permettre ce mouvement, la gaine 30 de la transmission souple 3 se déforme.

Dans le cas illustré à la figure 4, il est souhaité que la gaine se déforme entre les deux tringles 43 essentiellement selon la direction D2 qui est dans ce cas sensiblement verticale. L'espace ménagé entre les deux tringles 43 est en effet suffisamment important pour éviter que la gaine 30 vienne frotter contre celles-ci alors que l'élément semeur est déplacé sur le sol. Il est en revanche souhaité que la gaine se déforme peu selon la direction D1, essentiellement perpendiculaire à la direction D2 et à l'axe longitudinal Δ de la gaine 30, qui est donc dans ce cas sensiblement horizontale. En effet, on souhaite éviter que la gaine 30 vienne frotter contre les divers équipements (non représentés) qui sont susceptibles d'être placés de part et d'autre de la gaine 30.

Dans ce but, l'élément de rigidification 35 est solidarisé à la gaine 30 en sorte que son moment quadratique par rapport à la direction D1 soit plus faible que son moment quadratique par rapport à la direction D2. La gaine 30 a alors davantage tendance à se déformer dans un plan passant par la deuxième direction D2 et son axe longitudinal Δ, que dans un plan passant par la première direction D1 et son axe longitudinal Δ.

La technique selon l'invention permet ainsi de limiter l'usure de la gaine 30 en maitrisant ses directions de déformations pour éviter qu'elle vienne frotter contre des éléments placés à proximité d'elle.

Dans des variantes, la première direction pourra ne pas être horizontale. L'orientation de la deuxième direction sera déterminée en conséquence.

## Revendications

1. Dispositif de transmission souple (3) comprenant une gaine de guidage (30) logeant un câble de transmission,
**caractérisé en ce qu'il** comprend des moyens de rigidification (35) pour limiter la déformation de ladite gaine (30) le long d'une première direction (D1) perpendiculaire à l'axe longitudinal (Δ) de ladite gaine (30) sans prévenir la déformation de celle-ci le long d'une deuxième direction (D2) essentiellement orthogonale à ladite première direction (D1) et audit axe longitudinal (Δ), les moyens de rigidification (35) étant solidaires de la gaine (30).

2. Dispositif selon la revendication 1, **caractérisé en ce que** lesdits moyens pour limiter la déformation comprennent au moins un élément de rigidification (35) qui s'étend le long d'au moins une partie de ladite gaine (30) selon son axe longitudinal (Δ), le moment quadratique dudit élément de rigidification (35) par rapport à ladite première direction (D1) étant plus faible que son moment quadratique par rapport à ladite deuxième direction (D2).

3. Dispositif selon la revendication 2, **caractérisé en ce que** ledit élément de rigidification (35) à une section essentiellement rectangulaire.

4. Dispositif selon la revendication 2 ou 3, **caractérisé en ce que** ledit élément de rigidification (35) est réalisé en matière métallique.

5. Dispositif selon la revendication 4, **caractérisé en ce que** ledit élément de rigidification comprend au moins un fer plat.

6. Dispositif selon la revendication 2 ou 3, **caractérisé en ce que** ledit élément de rigidification (35) est réalisé en matière plastique et/ou composite.

7. Dispositif selon l'une quelconque des revendications 2 à 6, **caractérisé en ce que** ledit élément de rigidification (35) est solidarisé à ladite gaine (30) par clippage.

8. Dispositif selon l'une quelconque des revendications 2 à 6, **caractérisé en ce que** ladite gaine (30) est surmoulée autour dudit élément de rigidification (70, 71).

9. Moyens de rigidification pour dispositif de transmission selon l'une quelconque des revendications 1 à 8.

10. Equipement agricole (40) comprenant :
- un dispositif de transmission (3) selon l'une quelconque des revendications 1 à 8 ;
- un premier élément (41) destiné à être solidarisé à un engin agricole, et un deuxième élément (42) portant des moyens de distribution d'un produit (47) destinés à être entraînés en mouvement par ledit dispositif de transmission (3), lesdits premier (41) et deuxième (42) éléments étant liés entre eux au moyen de tringles (43) formant avec lesdits éléments (41, 42) au moins un parallélogramme articulé en sorte que ledit deuxième élément (42) est mobile par rapport audit premier élément (41) dans un plan passant par ledit axe longitudinal (Δ) et ladite deuxième direction (D2),
une extrémité de ladite gaine (3) étant reliée auxdits moyens de distribution (47), son autre extrémité étant solidarisée audit premier élément (41) et destinée à être solidarisée à des moyens moteur.
